# EUROPEAN PATENT APPLICATION

(11) **EP 4 510 428 A1**
(43) Date of publication of application: **19.02.2025**
(21) Application number: 22937391.5
(22) Date of filing: 12.04.2022
(51) Int. Cl.: H02K 3/50

(54) **ROTARY ELECTRIC MACHINE STATOR**

(71) Applicant: Hitachi Astemo, Ltd., Ibaraki 312-8503 (JP)
(72) Inventor: TATENO, Keisuke, Hitachinaka-shi, Ibaraki 312-8503 (JP)
(74) Representative: MERH-IP Matias Erny Reichl Hoffmann Patentanwälte PartG mbB
(86) International application number: PCT/JP2022/017630
(87) International publication number: WO 2023/199412

(57) **Abstract**

A stator in a rotary electric machine includes a cylindrical-shaped core having a plurality of slots, and coils disposed side by side in the slots, the coils having respective end portions connected to each other to constitute 2n sets of Y-connected wires (n is an integer of 1 or more) constituted by a group of phase windings having different electric phases. The stator further includes a wire connection portion connecting the coils to each other. The wire connection portion includes a first conductive plate member, a second conductive plate member, and a third conductive plate member for connecting the end portions of the coils of the same phase to each other, and a neutral-point connection plate member for connecting neutral points of the group of phase windings to each other. The neutral-point connection plate member connects a coil disposed in an inner layer in a radial direction of the core and a coil disposed in an outer layer in the radial direction of the core to each other, and the neutral-point connection plate member is divided into a plurality of sections in a circumferential direction of the core. In the wire connection portion, at least one of the first conductive plate member, the second conductive plate member, and the third conductive plate member and at least one of the sections of the divided neutral-point connection plate member are disposed at positions overlapping each other in an axial direction of the core.

## Description

### Technical Field

The present invention relates to stators in rotary electric machines.

### Background Art

Rotary electric machines are widely used, and are required to be downsized in cases of being mounted on moving bodies such as automobiles. PTL 1 discloses a rotary electric machine including a stator core, stator windings constituted by a plurality of segment coils, and a connection plate for fixing different-phase connection conductors connecting the different phases of the segment coils in the stator windings and same-phase connection conductors connecting the segment coils of the same phase in the stator windings, wherein the stator windings have coil connection portions at which the end portions of the plurality of segment coils are connected to each other on one side of the stator core in the axial direction, and the connection plate is disposed on the side of the stator core on which the coil connection portions are disposed.

### Citation List

### Patent Literature

PTL 1: WO 2017/195481 A

### Summary of Invention

### Technical Problem

In the invention described in PTL 1, there is room for improvement in downsizing of the rotary electric machine.

### Solution to Problem

A stator in a rotary electric machine in a first aspect of the present invention includes a cylindrical-shaped core having a plurality of slots, and coils disposed side by side in the slots, the coils having respective end portions connected to each other to constitute 2n sets of Y-connected wires (n is an integer of 1 or more) constituted by a group of phase windings having different electric phases. The stator further includes a wire connection portion connecting the coils to each other. The wire connection portion includes a first conductive plate member, a second conductive plate member, and a third conductive plate member for connecting the end portions of the coils of the same phase to each other, and a neutral-point connection plate member for connecting neutral points of the group of phase windings to each other. The neutral-point connection plate member connects a coil disposed in an inner layer in a radial direction of the core and a coil disposed in an outer layer in the radial direction of the core to each other, and the neutral-point connection plate member is divided into a plurality of sections in a circumferential direction of the core. In the wire connection portion, at least one of the first conductive plate member, the second conductive plate member, and the third conductive plate member and at least one of the sections of the divided neutral-point connection plate member are disposed at positions overlapping each other in an axial direction of the core.

### Advantageous Effects of Invention

According to the present invention, it is possible to downsize a stator.

### Brief Description of Drawings

[FIG. 1] FIG. 1 is an external view of a stator.
[FIG. 2] FIG. 2 is a view of connection of a first neutral line and a second neutral line.
[FIG. 3] FIG. 3 is an enlarged view of a wire connection portion.
[FIG. 4] FIG. 4 is a cross-sectional view taken along a line IV-IV in FIG. 3.
[FIG. 5] FIG. 5 is an exploded view of the wire connection portion.
[FIG. 6] FIG. 6 is a schematic view illustrating a positional relationship in the wire connection portion.
[FIG. 7] FIG. 7 is an enlarged view illustrating a portion of connection between a single-phase coil and the wire connection portion.
[FIG. 8] FIG. 8 is a view illustrating variations of the wire connection portion.

### Description of Embodiments

### -Embodiment-

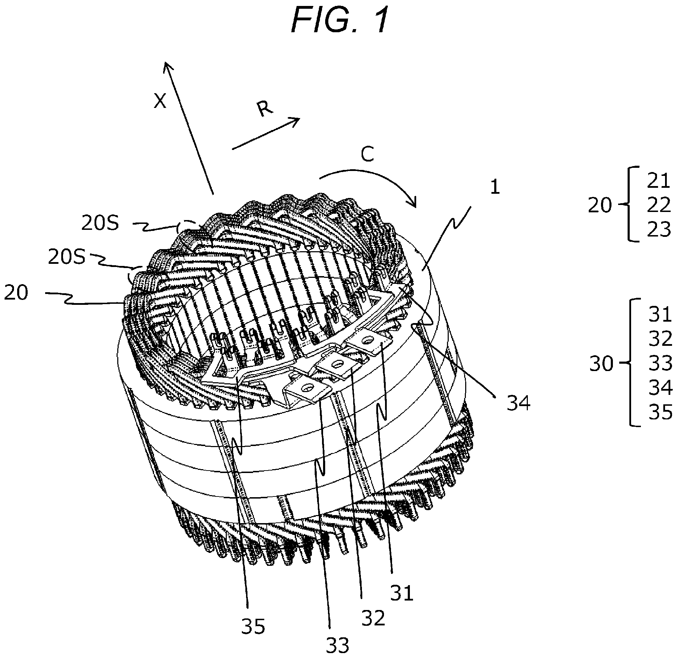

Hereinafter, there will be described an embodiment of a stator in a rotary electric machine, with reference to FIGS. 1 to 7.

FIG. 1 is an external view of a stator 100. The stator 100 includes a cylindrical-shaped core 1 having slots 2, winding coils 20 inserted in the slots 2, and a wire connection portion 30 connecting the winding coils 20 to the outside. In the present embodiment, there are defined an axial direction X, a radial direction R, and a circumferential direction C. The axial direction X is a straight line parallel to the axis of the cylindrical-shaped core 1. The radial direction R is a straight line orthogonal to the axis of the core 1 and passing through the axis of the core 1. The circumferential direction C is a direction along the outer periphery of the core 1.

The winding coils 20 are constituted by a group of phase windings having different electric phases. The winding coils 20 specifically include U-phase coils 21, V-phase coils 22, and W-phase coils 23. The winding coils 20 according to the present embodiment include four sets of Y-connected coils. Hereinafter, each of the U-phase coils 21, the V-phase coils 22, and the W-phase coils 23 will be collectively referred to as a "single-phase coil" 20A. Namely, the winding coils 20 according to the present embodiment have 3 phases × 4 sets and, therefore, are constituted by 12 single-phase coils 20A. The single-phase coil 20A can also be said to be one phase winding constituting the group of phase windings. The winding coils 20 are provided, at their end portions in the axial direction X, with protruding portions 20S protruding from the core 1 along the axial direction X, periodically along the circumferential direction C**.**

The wire connection portion 30 has a role in connecting the single-phase coils 20A to each other inside the stator 100 and connecting them to the outside of the stator 100. The wire connection portion 30 includes a U-phase bus bar 31, a V-phase bus bar 32, a W-phase bus bar 33, a first neutral line 34, and a second neutral line 35. The U-phase bus bar 31 connects the U-phase coils 21 to each other and has a terminal to be connected to the outside. The V-phase bus bar 32 connects the V-phase coils 22 to each other and has a terminal to be connected to the outside. The W-phase bus bar 33 connects the W-phase coils 23 to each other and has a terminal to be connected to the outside. The first neutral line 34 and the second neutral line 35 provide only connection between the single-phase coils 20A inside the stator 100, and have no terminal to be connected to the outside of the stator 100.

Each of the U-phase bus bar 31, the V-phase bus bar 32, and the W-phase bus bar 33 is connected to four single-phase coils 20A. Each of the first neutral line 34 and the second neutral line 35 is connected to six single-phase coils 20A. Each of the U-phase bus bar 31, the V-phase bus bar 32, the W-phase bus bar 33, the first neutral line 34, and the second neutral line 35 is a plate-shaped member, and is formed by applying sheet metal working to a plate material.

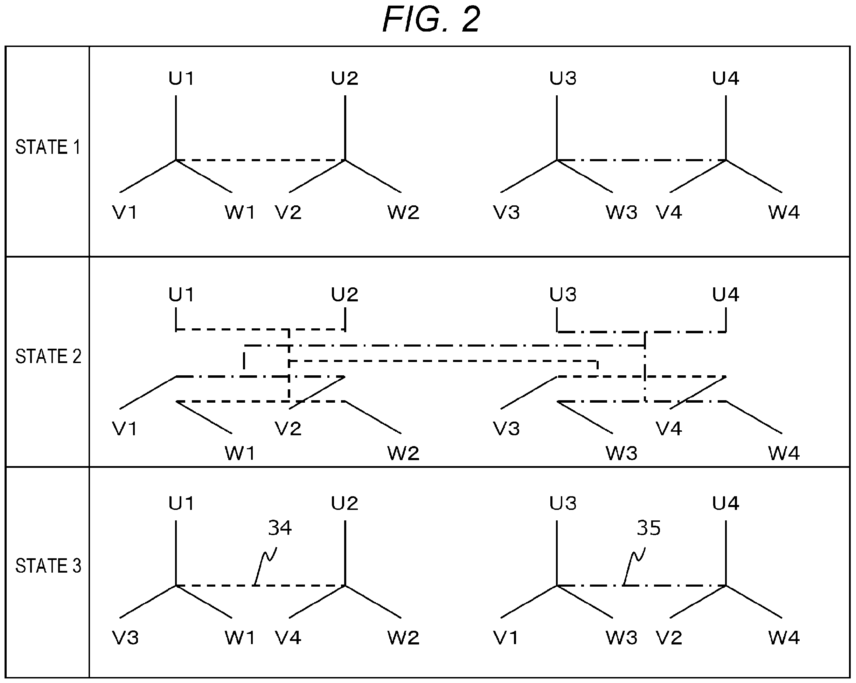

FIG. 2 is a view of the connection of the first neutral line 34 and the second neutral line 35. Although four neutral points connecting respective UVW layers can be provided, in the present embodiment, neutral lines connecting respective two sets of UVW layers are provided in order to reduce the number of components. In this case, it is conceivable to configure neutral lines simply connecting respective two sets of neutral points as illustrated as a state 1 in the upper part of FIG. **2****.** Also, due to the characteristics of the neutral points, it is possible to connect a set of neutral points to another set. Therefore, they may be rearranged as in a state **2.** A state 3 is obtained by organizing the description of the state **2.** The present embodiment adopts the connection in the state 3**.**

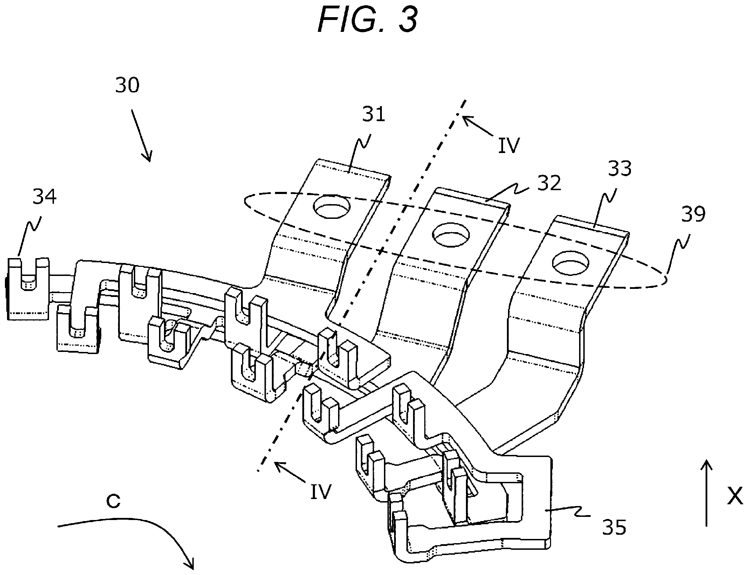

FIG. 3 is an enlarged view of the wire connection portion 30. A range indicated by a reference numeral 39 in the upper part of FIG. 3 is a region connected to the outside of the stator 100. The wire connection portion 30 is divided into three layers in the axial direction X**.** The U-phase bus bar 31 and the second neutral line 35 belong to the first layer in the upper stage in the figure. The V-phase bus bar 32 and the first neutral line 34 belong to the second layer in the middle stage in the figure. The W-phase bus bar 33 belongs to the third layer in the lower stage in the figure.

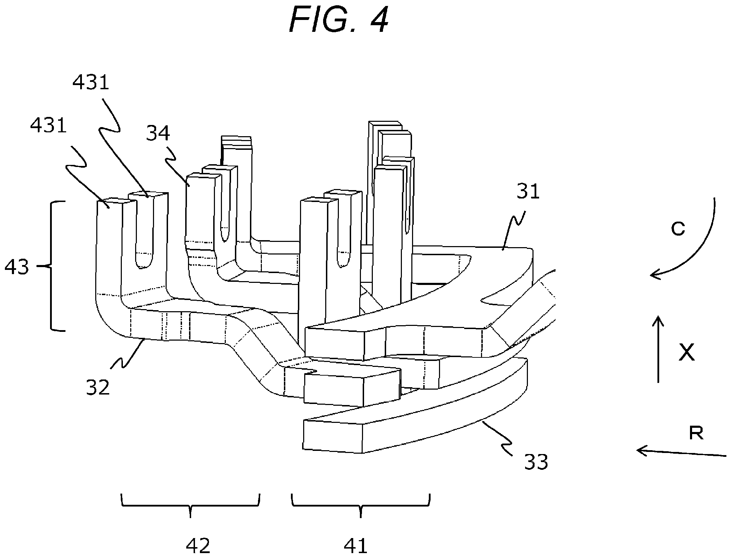

FIG. 4 is a cross-sectional view taken along a line IV-IV in FIG. 3. There is illustrated the wire connection portion 30 having a three-layer structure in the axial direction X, as described above. Each of the U-phase bus bar 31, the V-phase bus bar 32, the W-phase bus bar 33, the first neutral line 34, and the second neutral line 35 has a common abstract configuration which will be described next, although they are different in specific shape. Namely, each of the U-phase bus bar 31, the V-phase bus bar 32, the W-phase bus bar 33, the first neutral line 34, and the second neutral line 35 includes a connection base portion 41, a connection portion 42, and a coil coupling portion 43.

The connection base portion 41 is a portion extending in the circumferential direction C. In addition thereto, the U-phase bus bar 31, the V-phase bus bar 32, and the W-phase bus bar 33 include a portion to be connected to the outside of the stator 100. The connection portion 42 is a portion extending in the radial direction R, and connects the connection base portion 41 and the coil coupling portion 43 to each other. The coil coupling portion 43 is a portion extending in the axial direction X and is connected to the end portion of a single-phase coils 20A. The coil coupling portion 43 according to the present embodiment is bifurcated at its tip end and has an alphabet "U" shape. Hereinafter, the tip end of the bifurcated coil coupling portion 43 will be referred to as a coil coupling terminal 431. A single-phase coil 20A is connected to each coil coupling terminal 431.

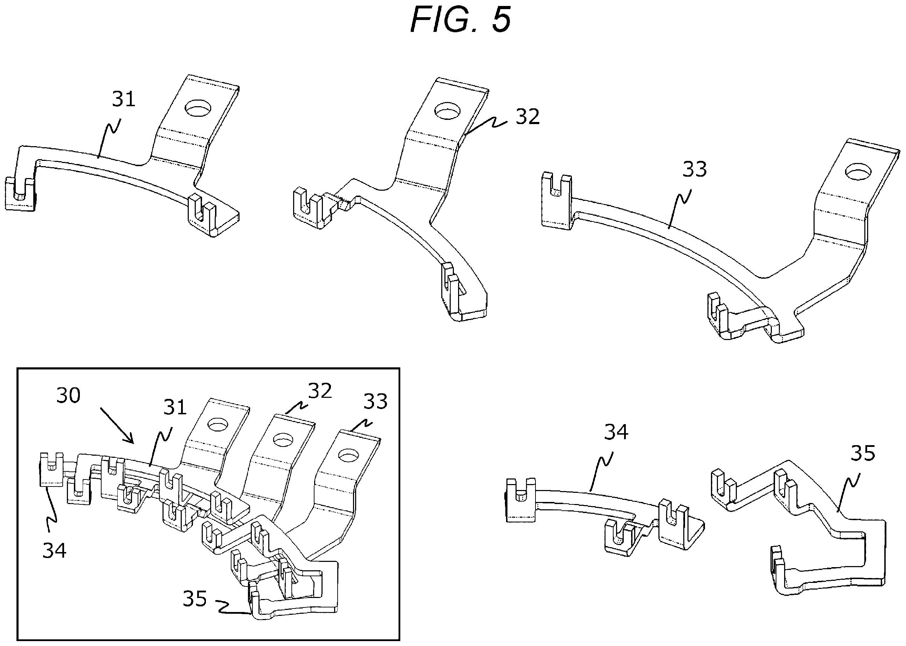

FIG. 5 is an exploded view of the wire connection portion 30. Strictly speaking, FIG. 5 illustrates the U-phase bus bar 31, the V-phase bus bar 32, the W-phase bus bar 33, the first neutral line 34, and the second neutral line 35 separately, and, further, illustrates the wire connection portion 30 in scaled-down FIG. 3 at a lower left part for confirmation. There are clearly illustrated the respective configurations in the wire connection portion 30, wherein these respective configurations overlap each other and their shapes are not clearly shown in FIG. 3.

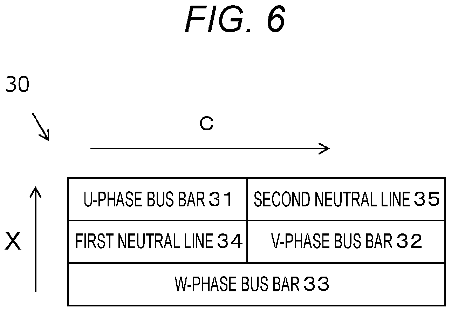

FIG. 6 is a schematic view illustrating the positional relationship in the wire connection portion 30. However, in FIG. 6, the portions to be connected to the outside of the stator 100 are ignored. The wire connection portion 30 is divided into three layers in the axial direction X, and the U-phase bus bar 31 and the second neutral line 35 belong to the first layer in the upper stage in the figure. The V-phase bus bar 32 and the first neutral line 34 belong to the second layer in the middle stage in the figure. The W-phase bus bar 33 belongs to the third layer in the lower stage in the figure. The U-phase bus bar 31, the first neutral line 34, and the W-phase bus bar 33 overlap each other in the axial direction X. The second neutral line 35, the V-phase bus bar 32, and the W-phase bus bar 33 overlap each other in the axial direction X. The first neutral line 34 and the second neutral line 35 are disposed at different positions in the axial direction X. By disposing them at different positions in the axial direction X, the wire connection portion 30 is inhibited from spreading in the circumferential direction C.

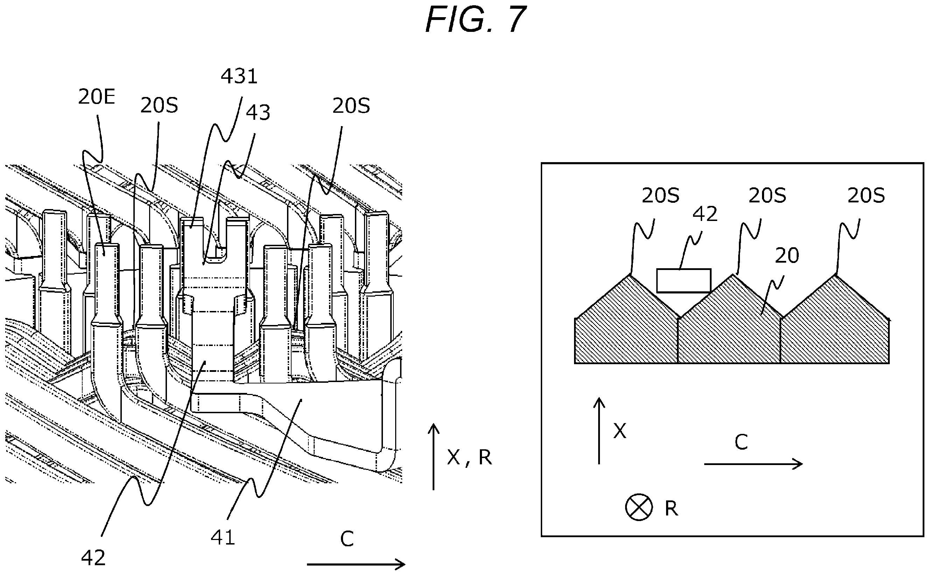

FIG. 7 is an enlarged view illustrating the portion of connection between single-phase coils 20A and the wire connection portion 30. However, FIG. 7 illustrates a state before the single-phase coils 20 A and the wire connection portion 30 are connected to each other. Further, FIG. 7 illustrates, in its right side, only winding coils 20 and a connection portion 42 from a slightly changed viewpoint. FIG. 7 illustrates a perspective view in its left side, wherein both the axial direction X and the radial direction R are illustrated in the vertical direction in the figure. In the right side of FIG. 7, the axial direction X is illustrated as the vertical direction in the figure, and the radial direction R is illustrated as a direction penetrating the paper surface.

As illustrated in FIG. 7, the connection portion 42 in the wire connection portion 30 is disposed between protruding portions 20S adjacent to each other. The cross-sectional area of the coil end portion 20E is equal to the cross-sectional area of the coil coupling terminal 431, which enables efficiently welding the coil end portion 20E and the coil coupling terminal 431 to each other. The cross-sectional area of the coil coupling terminal 431 is smaller than the cross-sectional area of the connection portion 42. Further, each of the coil coupling terminals 431 adjacent to each other is coupled to each of the single-phase coils 20A disposed in the slot 2 adjacent to each other, which reduces routing, thereby enabling effective welding.

According to the aforementioned embodiment, it is possible to provide the following effects and advantages.
(1) The stator 100 includes the cylindrical-shaped core 1 having a plurality of slots 2 and, further, includes the winding coils 20, which are coils disposed side by side in the slots 2 and which are connected to each other at their respective end portions to constitute four sets of Y-connected wires constituted by a group of phase windings having different electric phases. The stator 100 further includes the wire connection portion 30 connecting the single-phase coils 20A to each other. The wire connection portion 30 includes the U-phase bus bar 31, the V-phase bus bar 32, the W-phase bus bar 33, and the first neutral line 34 and the second neutral line 35 which connect neutral points of the group of phase windings to each other. The first neutral line 34 and the second neutral line 35 connect single-phase coils 20A disposed in an inner layer in the radial direction R in the core 1 and single-phase coils 20A disposed in an inner layer in the radial direction R in the core 1 to each other. The first neutral line 34 and the second neutral line 35 are divided into a plurality of sections in the circumferential direction C of the core 1. In the wire connection portion 30, at least one of the U-phase bus bar 31, the V-phase bus bar 32, and the W-phase bus bar 33, and at least one of the first neutral line 34 and the second neutral line 35 are disposed at positions overlapping each other in the axial direction X of the core **1.** This can downsize the wire connection portion 30, thereby downsizing the stator 100 including the wire connection portion 30.
(2) The first neutral line 34 and the second neutral line 35 are disposed at different positions in the axial direction X of the core 1. This can reduce the area in the circumferential direction C which is occupied by the first neutral line 34 and the second neutral line 35, which can downsize the wire connection portion 30, thereby downsizing the stator 100 including the wire connection portion 30.
(3) In the wire connection portion 30, at least two of the U-phase bus bar 31, the V-phase bus bar 32, and the W-phase bus bar 33, and at least one of the first neutral line 34 and the second neutral line 35 are disposed at positions overlapping each other in the axial direction X of the core 1. This can downsize the wire connection portion 30, thereby downsizing the stator 100 including the wire connection portion 30.
(4) The first neutral line 34 and the second neutral line 35 have the connection base portion 41 along the circumferential direction C of the core 1, the connection portion 42 protruding from the connection base portion 41 in the radial direction R of the core 1, and the coil coupling terminal 431 provided at an end of the connection portion 42 and coupled to the coil end portion 20E, which is an end portion of a winding. The winding coils 20 have protruding portions 20S protruding from the core 1 along the axial direction X, and the connection portion 42 is provided between the protruding portions 20S. This can reduce the height of the wire connection portion 30 in the axial direction X, which can downsize the wire connection portion 30, thereby downsizing the stator 100 including the wire connection portion 30.
(5) One connection portion 42 has a plurality of coil coupling terminals 431. One coil coupling portion 43 is coupled to one single-phase coil 20A. There is one-to-one correspondence between the coil coupling portion 43 and the coil end portion 20E of the single-phase coil 20A, which enables effective welding.
(6) The cross-sectional area of the coil coupling terminal 431 is smaller than the cross-sectional area of the connection portion 42 and is equal to the cross-sectional area of the coil end portion 20E. Therefore, since their cross-sectional areas are made equal to each other, heat dissipation therefrom are made equal, thereby stabilizing melting, in a case of TIG welding.
(7) Each of the coil coupling terminals 431 adjacent to each other is coupled to each of the single-phase coils 20 A disposed in the slots 2 adjacent to each other. This reduces routing, thereby enabling effective welding.
(8) The U-phase bus bar 31, the V-phase bus bar 32, the W-phase bus bar 33, the first neutral line 34, and the second neutral line 35 are plate members having been subjected to working in advance. This can facilitate assembling, thereby reducing the manufacturing cost.

### (First Modification)

The wire connection portion 30 can have various configurations. The bus bars corresponding to the respective UVW layers may be interchanged in position with one another, or may be interchanged in position with the respective neutral lines. Furthermore, the bus bars spreading widely in the circumferential direction C may be changed in position. However, a configuration which causes the neutral lines to widely spread in the circumferential direction C cannot be adopted. A specific description will be given with reference to the drawings.

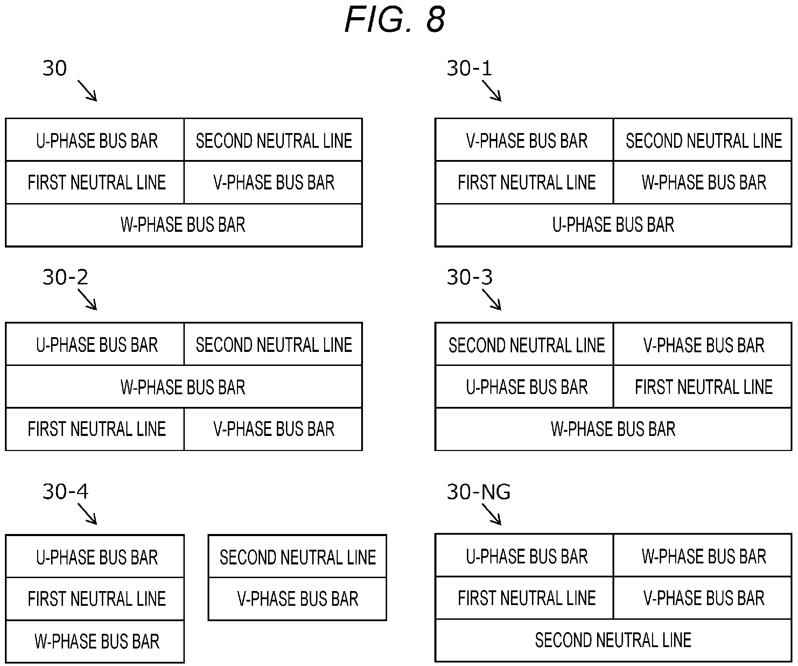

FIG. 8 is a view illustrating variations of the wire connection portion 30. The wire connection portion 30 can have the other configurations than 30-NG, out of the configurations illustrated in FIG. 8**.** A reference numeral 30 in the left side in the upper stage indicates the configuration according to the embodiment, indicating the same information as that in FIG. 6. A reference numeral 30-1 in the right side in the upper stage indicates a configuration which interchanges the bus bars for the respective UVW layers in the configuration of the wire connection portion 30.

A reference numeral 30-2 in the left side in the middle stage indicates a configuration which interchanges the second stage and the third stage in the wire connection portion 30 with each other. A reference numeral 30-3 in the right side in the middle stage indicates a configuration which interchanges, at random, the configurations of the first stage and the second stage in the wire connection portion 30 with each other. A reference numeral 30-4 in the left side in the lower stage indicates a configuration which positions the second neutral line 35 and the V-phase bus bar 32 such that they do not overlap the W-phase bus bar 33 in the axial direction X. A reference numeral 30-NG in the right side in the lower stage indicates a configuration which interchanges the second neutral line 35 and the W-phase bus bar 33 in the wire connection portion 30, which makes it possible to realize the state 3 in FIG. 2. Therefore, this is an inappropriate configuration.

### (Second Modification)

In the aforementioned embodiment, the winding coils 20 include four sets of Y-connected coils. However, the number of sets of Y-connected coils included in the winding coils 20 may be any even number, such as 2, 4, 6, and 8. Here, defining "n" as an integer of 1 or more, the winding coils 20 may include "2n" sets of Y-connected coils. In this case, the number of coil coupling terminals 431 included in each coil coupling portion 43 is "n". For example, in a case where the winding coils 20 include "6" sets of Y-connected coils, the number of coil coupling terminals 431 included in each coil coupling portion 43 is "3".

The aforementioned embodiment and modifications may be combined with each other. Although various embodiments and modifications have been described above, the present invention is not limited to the contents of them. Other aspects conceivable within the scope of the technical idea of the present invention are also included within the scope of the present invention.

### Reference Signs List

1 core
2 slot
20 winding coil
20A single-phase coil
20E coil end portion
20S protruding portion
30 wire connection portion
31 U-phase bus bar
32 V-phase bus bar
33 W-phase bus bar
34 first neutral line
35 second neutral line
41 connection base portion
42 connection portion
43 coil coupling portion
100 stator
431 coil coupling terminal
C circumferential direction
R radial direction
X axial direction

## Claims

1. A stator in a rotary electric machine, comprising:
a cylindrical-shaped core having a plurality of slots;
coils disposed side by side in the slots, the coils having respective end portions connected to each other to constitute 2n sets of Y-connected wires (n is an integer of 1 or more) comprising a group of phase windings having different electric phases; and
a wire connection portion connecting the coils to each other,
wherein the wire connection portion comprises a first conductive plate member, a second conductive plate member, and a third conductive plate member for connecting the end portions of the coils of a same phase to each other, and a neutral-point connection plate member for connecting neutral points of the group of phase windings to each other,
the neutral-point connection plate member connects a coil disposed in an inner layer in a radial direction of the core and a coil disposed in an outer layer in the radial direction of the core to each other,
the neutral-point connection plate member is divided into a plurality of sections in a circumferential direction of the core, and
in the wire connection portion, at least one of the first conductive plate member, the second conductive plate member, and the third conductive plate member and at least one of the sections of the divided neutral-point connection plate member are disposed at positions overlapping each other in an axial direction of the core.

2. The stator in the rotary electric machine according to claim 1, wherein the respective sections of the divided neutral-point connection plate member are disposed at different positions in the axial direction of the core.

3. The stator in the rotary electric machine according to claim 1**,** wherein in the wire connection portion, two of the first conductive plate member, the second conductive plate member, and the third conductive plate member and one of the sections of the divided neutral-point connection plate member are disposed at positions overlapping each other in the axial direction of the core.

4. The stator in the rotary electric machine according to claim 1**,** wherein
the neutral-point connection plate member includes
a connection base portion along the circumferential direction of the core,
a connection portion protruding from the connection base portion in the radial direction of the core, and
a coil coupling portion which is a portion provided at an end of the connection portion and is coupled to a coil end portion which is an end portion of the coil,
the coils include protruding portions protruding from the core along the axial direction, and
the connection portion is provided between the protruding portions.

5. The stator in the rotary electric machine according to claim 4**,** wherein
the one coil coupling portion includes at least one coil coupling terminal coupled to one single-phase coil constituting the group of phase windings, and
the one coil coupling portion includes a same number of the coil coupling terminals as the number "n".

6. The stator in the rotary electric machine according to claim 5**,** wherein a cross-sectional area of the coil coupling terminal is smaller than a cross-sectional area of the connection portion and is equal to a cross-sectional area of the coil end portion.

7. The stator in the rotary electric machine according to claim 5, wherein each of the coil coupling portions adjacent to each other is coupled to each of the single-phase coils disposed in the slots adjacent to each other.

8. The stator in the rotary electric machine according to claim 1, wherein the first conductive plate member, the second conductive plate member, the third conductive plate member, and the neutral-point connection plate member are each a plate member subjected to working in advance.
